# EUROPEAN PATENT APPLICATION

(11) **EP 4 000 763 A1**
(43) Date of publication of application: **25.05.2022**
(21) Application number: 20020551.6
(22) Date of filing: 20.11.2020
(51) Int. Cl.: B22F 3/00, B22F 9/08

(54) **ULTRASONIC METAL POWDER ATOMIZER**

(71) Applicant: MP Interconsulting, 2400 Le Locle (CH)
(72) Inventor: PROKIC, Miodrag, 2400 Le Locle (CH); ZRODOWSKI, Tukasz, 02-507 Warsaw (PL); PUGA, Hélder, 4780-510 Santo Tirso (PT)

(57) **Abstract**

Ultrasonic metal powder atomizer comprising: piezoelectric transducer , ultrasonic signal generator, consumable sonotrode, vacuum chamber, positioning system and heat source characterized in that ultrasonic transducer is connected to consumable sonotrode by a flexible waveguide having at least three different excitation modes within 500 Hz from target frequency of ultrasonic transducer while being connected to the the piezoelectric transducer and the ultrasonic generator operates at frequency sweeping mode with at least 500 Hz span.

## Description

Additive Manufacturing (AM) techniques such as Laser Powder Bed Fusion (LPBF) or Electron Beam Melting (EBM) required powders with exceptional flowability to ensure process repeatability and high density of printed material.

Typically such powders are produced via gas atomization, although, due to the industrial-scale of atomizers search for new alloys, fine-tuned for AM, is expensive and limits the number of composition to be tested. Such a limitation is especially troublesome during chemical optimization of precious metal powders such as gold and highly reactive or toxic materials.

Main limitation of gas and centrifugal atomization is associated with high speed of pulverized particles during the atomization process, which forces large dimensions of the atomization tower. The method based on radio-frequency plasma spheroidization requires powder as a raw feedstock thus their application is mostly limited to brittle materials such as refractory metals and titanium hydrides.

The ultrasonic atomization is one of the least explored method of melt atomization. Instead of high velocity gas or centrifugal force, acoustic wave brakes internal forces of the molten metal. Vibration can be introduced directly with a sonotrode (ultrasonic tool) or via vibrating medium. Such a method has been extensively used for solders, aluminum, zinc and magnesium alloys production or alloys with higher melting temperature such as steel and titanium.

As shown by Y. Goto et al. in "Metallic Powder Production form a Plate Arc Electrode Vibrated in an Ultrasonic Frequency" the operation time and batch of atomized powder is limited by frequency shift of heated vibrating elements.

There are three different methods of providing that ultrasonic tools continuous operations: high-temperature materials, intensive tool cooling and continuous material atomization.

The first group provides eg. tungsten, niobium, tantalum or ceramic sonotrodes. It is useful in case of aluminum alloys melt processing, although alloys with higher melting temperature are impossible to atomize due to high temperature material fatigue.

JP2002096024 shows the method of obtaining silicon nitride sonotrodes and their use in ultrasonic processes. Due to the high price and low resistance to brittle cracking, this material has not found commercial use. CN102554195 describes the use of tantalum as a coating for a vibrating element for working with liquid metal. US8844897 describes the use of niobium as a coating for components in contact with liquid metals. JPS5925904A describes an ultrasonic atomizer in which the sonotrode is made of tungsten.

Examples above show metals with high melting points and thermal stability as good coating for sonotrodes for working with liquid metals.

Second group consist of methods of cooling the ultrasonic tools to cool it bellow damping temperature.

GB952042 and DE102008029769 describe the use of internal cooling channels inside a vibrating sonotrode. The disadvantages of this solution are primarily a high level of difficulty and the cost of making such an element, as well as its short operating life, caused by cavitation inside the channels, leading to rapid destruction of the element by mechanical erosion.

JPS59189042 describes an ultrasonically excited mold for casting metals and their alloys. The mold is connected to a bronze waveguide that works in the coolant, then it is connected with a copper connector, which is located outside the cooling system. Entire waveguide works in a water jacket, and the waveguide comes into contact with high temperature only through the copper mold.

CN1422718 describes an ultrasonic atomizer with an active cooling of the vibratory system. The piezoceramic-containing part of the system is air-cooled, and the sonotrode is independently cooled by water or air, whereby two cooling stages are active. Liquid metal is in direct contact with the sonotrode. The disadvantage of the solution is low resistance to high temperatures and high frequency change due to material heating. If the sonotrode material has low thermal conductivity, there is a significant shift in the resonance frequency of the system, and the overheated sonotrode components are damaged due to loss of fatigue strength at high temperature.

DE2656330 describes the use of a plasma arc to melt atomized high-melting metals. In a preferred version of the invention, the copper sonotrode is also a plasma arc electrode. In this case, the sonotrode works in a non-contact way and the thermal load is negligible.

US 2012216576 describes a method of ultrasonic glass processing and instrumentation allowing the cooling of vibrating elements in contact with a liquid medium. In this case, the booster is cooled.

Solutions based on cooling the sonotrode are only efficient if the thermal effect does not lead severe change in its resonance frequency or loosening of fasteners.

In third group material is atomized as soon as it is melted so no overheating occurs.

US3275787 describes six systems using of an electron beam to melt a vibrating metal in a vacuum chamber. In another example of the application, a vibrating system is made of high-melting material ontowhich liquid metal is poured from an induction-heated crucible. The disadvantage of the solution is high vacuum necessary to maintain the electron beam and the sonotrode material (steel), which is not able to dissipate the heat of the liquid metal.

Chinese application CN107138733 describes a method of producing spherical powders and 3D printing in which the wire passes through a transducer and is blocked by a mechanical element, and then melted with a localized energy source and sprayed. Method by of the invention assumes cyclical work - wire atomization, mechanism unblocking, wire section feeding, mechanism blocking, atomization.

DE3032785 show ultrasonic atomization of metal powder by ultrasonically vibrating a metal body having a molten zone at its surface formed with a high energy heat source, the rate of heat supply is so high that the speed of travel of the melt front through the body is at least as great as that of the softening temp. Main limitation of such system is inability to keep longitudal body such as a rod, vibrating with standard ultrasonic systems. Material is severely fatigued at nodes and provides atomization only in antinodes.

The invention removes limitations shown above by introducing frequency-wideband, multimodal vibration to the ultrasonic system via flexible waveguide and multimodal operation. Ultrasonic metal powder atomizer by the invention is composed from piezoelectric transducer tolerant to frequency modulation, ultrasonic signal generator, consumable sonotrode, vacuum chamber , positioning system, heat source characterized in that ultrasonic transducer is connected to consumable sonotrode by a flexible waveguide having at least three different excitation modes within 500 Hz from target frequency of ultrasonic transducer while being connected to the the piezoelectric transducer and the ultrasonic generator operates at frequency sweeping mode with at least 500 Hz span.

In case of multimode vibration there are no static nodes thus fatigue of heated ultrasonic elements is limited and whole consumable sonotrode surface can be ultrasonically activate. Using typical rigid body systems as show in DE3032785 creates only one efficient surface for atomization at the top of vibrated rod. Simultaneous excitation of multiple modes provides that whole body can be used for such purpose.

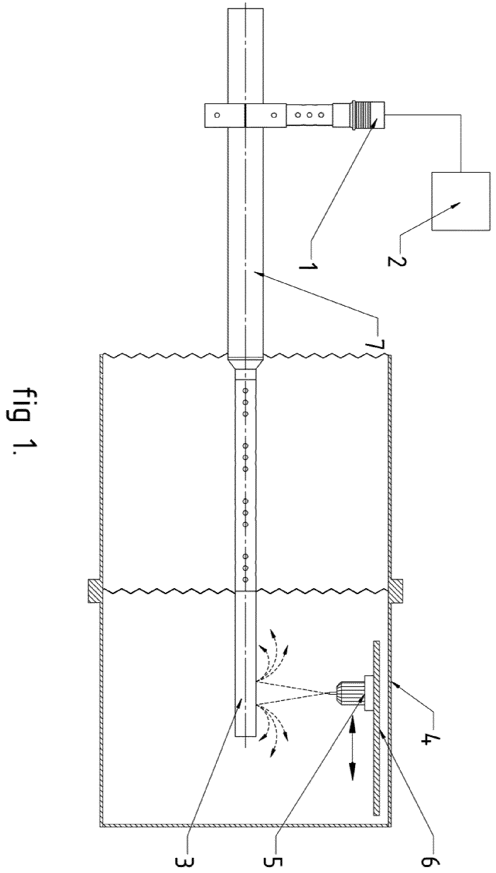

Invention is shown on embodiments. Fig. 1 shows ultrasonic powder atomizer by the invention having ultrasonic transducer 1, ultrasonic signal generator 2, consumable sonotrode 3, vacuum chamber 4, positioning system 5, heat source 6 and a flexible waveguide 7. Ultrasonic transducer can be bolt clamped ultrasonic transducer or unidirectional single piston ultrasonic transducer as described in EP1060798, in presented embodiment transducer target frequency is between 20 kHz and 50 kHz. Ultrasonic signal generator operates in multifrequency mode with frequency sweeping at least 500 Hz to activate both torsional, bending and longitudinal modes of ultrasonic system. In presented embodiments consumable sonotrode 3 is threaded rod although it could be a bar or any other elongated body. Length of the consumable sonotrode is between 200 mm and 6000 mm. Vacuum chamber 4 consist of state-of-the-art elements such a pump, cooling jacket and control system. In case of electron beam as a heat source vacuum chamber fulfils HV (high vacuum) condition including residual gas pressure bellow 5*10-5mbar. Vacuum chamber can be filled with inert gas after air evacuation. Within vacuum chamber 4 there is an electronically controlled positioning system 5 which moves heat source - electron gun 6. Any other heat source such as plasma torch, induction coil or laser beam can be used depending on material. For example, atomization of zinc-containing aluminum alloys requires elevated pressure in process chamber.

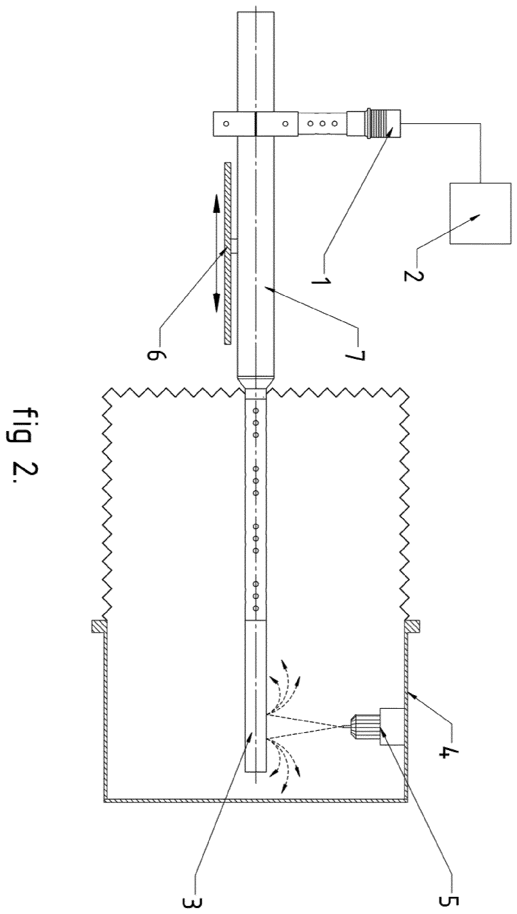

In another embodiment in fig. 2 heat source 6 is static and consumable sonotrode 3 is operated by mechanical system 5 located outside of vacuum chamber.

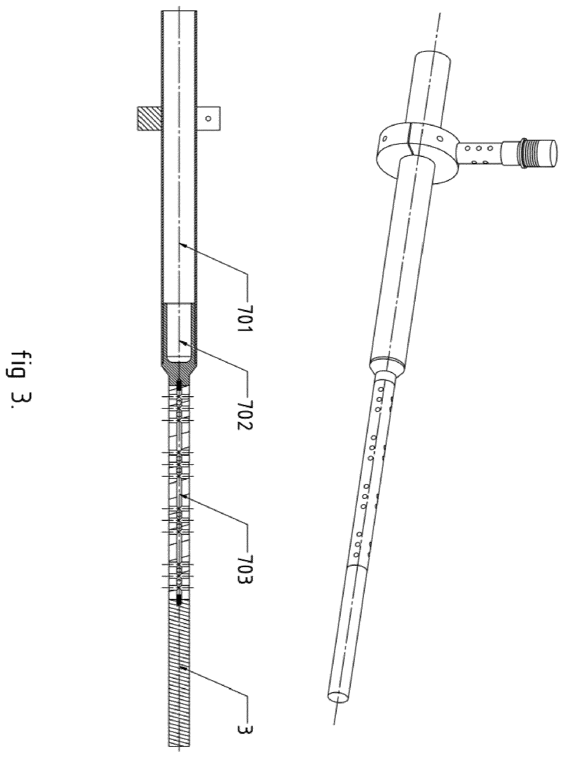

Flexible waveguide 7 is presented in fig. 3. It consists of tubular element 701 connected perpendicular to the transducer axis, threaded joint 702 and holed bar 703 with thread designed for sonotrode connection. Tubular element 701 is connected directly to the transducer or via additional waveguide. Tubular element has outer diameter 70 mm wall thickness 3 mm, and length of 500 mm. It is connected through threaded joint 702 to waveguide 703. Tubular element enhances torsional modes of vibration while the wave guide enhances bending modes of vibration.

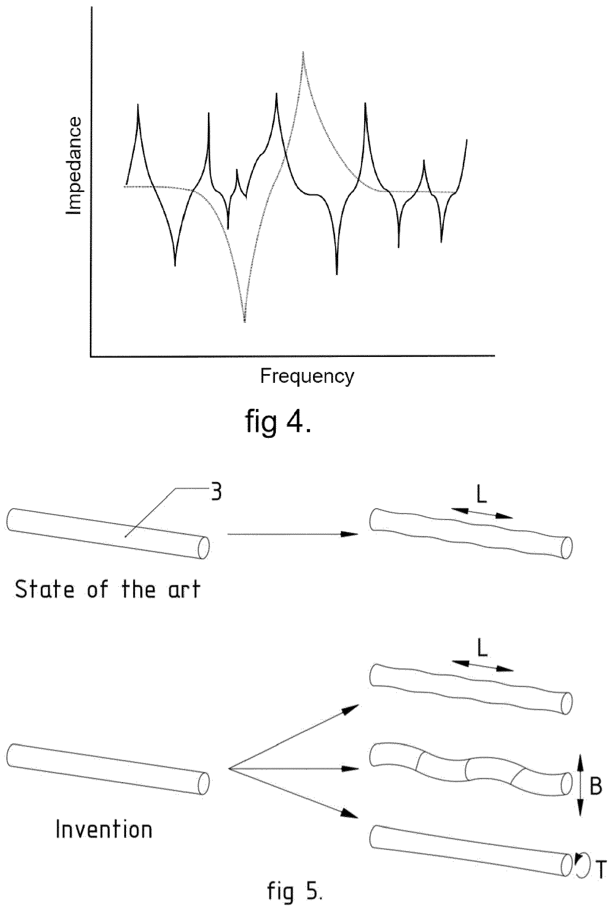

In fig. 4. there is presented impedance-frequency curve for typical rigid ultrasonic systems (dashed) and system by the invention.

Multiple peaks show different vibration modes provided by a flexible waveguide in the excited body. In fig. 5. there is presented difference in state of the art and the invention. State of the are shows only longitudinal vibration while the invention due to flexible waveguide provides longitudinal (L), bending (B) and torsional (T) vibration modes at the same time.

## Claims

1. Ultrasonic metal powder atomizer comprising: piezoelectric transducer 1, ultrasonic signal generator 2, consumable sonotrode 3, vacuum chamber 4, positioning system 5, heat source 6 **characterized in that** ultrasonic transducer 1 is connected to consumable sonotrode by a flexible waveguide 7 having at least three different excitation modes within 500 Hz from target frequency of ultrasonic transducer while being connected to the the piezoelectric transducer 1 and the ultrasonic generator 2 operates at frequency sweeping mode with at least 500 Hz span.

2. Ultrasonic metal powder atomizer from claim 1. **characterized in that** heat source 6 is operated by mechanical positioning system 5 within vacuum chamber 4.

3. Ultrasonic metal powder atomizer from claim 1. **characterized in that** the consumable sonotrode is operated by mechanical positioning system 5 within vacuum chamber 4.

4. Ultrasonic metal powder atomizer from claim 1. **characterized in that** flexible waveguide 7 consist of tubular element 701 connected perpendicular to the transducer axis, threaded joint 702 and holed bar 703 with thread designed for sonotrode connection.
